# EUROPEAN PATENT APPLICATION

(11) **EP 0 618 520 A1**
(43) Date of publication of application: **05.10.1994**
(21) Application number: 93830406.0
(22) Date of filing: 05.10.1993
(51) Int. Cl.: G05B 19/18

(54) **A gear cutting machine**

(30) Priority: 29.03.1993 IT BO930128
(71) Applicant: MIKRON S.p.A. BOLOGNA, I-40050 Villanova di Castenaso (Bologna) (IT)
(72) Inventor: Lunazzi, Alessandro, I-40139 Bologna (IT)
(74) Representative: Lanzoni, Luciano

(57) **Abstract**

In a hobbing machine comprising a bed (1), a first movable upright (2) supporting the tool (21) and a second upright (3) supporting the blank (31), the distance between tool and blank can be adjusted by traversing the first upright (2) toward and away from the second utilizing a drive (5) interlocked to a processing unit (10) in receipt of signals from position sensors (6, 8) which are installed at different levels (Q, Z) above the bed, in such a way as to allow a comparison of linear variations in the distance separating the uprights, resulting especially from thermal expansion, and thus monitor distortion in the machine more accurately.

## Description

The present invention relates to a gear cutting machine, and specifically to a gear cutting machine incorporating a system for the automatic correction of errors caused by dimensional variations deriving in particular from thermal expansion.

Whilst reference is made in the specification to hobbing machines (to be discussed more fully in due course), the invention is applicable nonetheless to other types of machine using circular or linear tools.

In a broadly typical embodiment, a hobbing machine comprises a substantially parallelepiped bed, and, supported in longitudinal alignment by the bed, a movable block or first upright, also substantially parallelepiped, and a revolving table flanked and surmounted by a fixed structure which in practice functions as a second upright serving to carry a chuck by which the work is clamped.

The first upright is mounted slidably to the bed in most instances, and will carry a slide or carriage positioned facing the revolving table and capable of movement in a vertical direction. The function of the slide is to support the spindle about which the tool, in this case a hob, is set in rotation and offered to a blank clamped onto the revolving table and rotated about a vertical axis.

In other embodiments of such machines, it is the second upright (carrying the revolving table and the work) which slides longitudinally on the base, while the first upright remains fixed.

Machines of the type in question incorporate one or more nozzles, positioned above the area of contact between the tool and the blank, from which a stream of cutting fluid is directed continuously onto the work in such a way as to cool the parts in movement and carry away the chips removed from the blank.

In the more modern hobbing machines, the combined effect of particularly high operating speeds and practically non-stop machining (blanks are loaded automatically) is that both the parts in movement and the slurry of cutting fluid and chips become progressively overheated, the heat thus generated then being transferred to the area of the machine bed between the tool and the work. In the course of events, these periods of continuous operation may be followed by periods of inactivity (for example, when changing from one production run to another), during which the more exposed upper parts of the machine directly involved in the machining process (in effect, the uprights) tend to cool, while heat accumulated in the bed and the tank is dissipated more slowly due to thermal inertia of the fluid.

The expansion generated by these thermal shocks is particularly noticeable along the longitudinal axis of the bed, the effect being to occasion variations in the distance separating the axes of rotation of the tool and of the revolving table, measured in a plane normal to the axis of rotation of the work; thus it happens, with operation of the machine over time, that gears may be manufactured with less than perfectly constant dimensional specifications.

The prior art embraces a number of systems designed to overcome the drawback in question, which imposes serious limitations on the precision of a hobbing machine, especially since the advent of numerical control.

In one such system, errors attributable to thermal expansion are corrected manually. In effect, the machine remains under the constant control of the operator, who will continue to check the dimensions of the cut gears at least until such time as the temperature has reached a relatively stable value.

In the event that the dimensions do not respond to specification, the upright is adjusted for position in relation to the bed in such a way as to restore the proper distance between the axes of rotation of the tool and the work. Disadvantageously, not only does this corrective action require the presence of the operator on a permanent basis, but there is a considerable element of wasted time; neither indeed can the dimensions be monitored successfully on a piece-by-piece basis, given that the mean operating temperature of the machine is only a "relatively" stable temperature, even with thermal equilibrium established, and insufficiently precise for gears manufactured to the stringent standards of current quality control parameters (requiring dimensional variations no greater than a few hundredths of a millimetre).

Another system is based on the notion of exploiting the mass of cutting fluid as a means of control by regulating its temperature; this can be achieved by directing the fluid through a circuit comprising cooling means (such as a heat exchanger), though the machine utilized in such a solution is typified by high costs, and in operation there continues to be a transitory period of stabilization which will vary according to the duration of pauses or breaks in machining.

A further attempt aimed at solving the problem of dimensional distortion consists in circulating the cutting liquid over the entire machine, in such a way as to maintain a constant temperature overall, uprights included, although there are difficulties in this instance too, stemming from the embodiment of the machine (which is not simple) and the need to establish a steady operating temperature; in practice, the effectiveness of any such solution remains tied to the varying duration of machining operations and of the pauses between successive batches or production runs.

One possible solution to the problem in question is described and illustrated in patent IT - 1 157 495, which discloses the adoption of a hobbing machine wherein variations of the distance separating the axis of the tool and the axis of the work, caused by the thermal expansion of the bed, are corrected automatically by means of a drive unit acting in response to information derived from a continuously monitored temperature value; in effect, a hobbing machine embodied according to the teaching of this reference comprises not only the basic prior art components described in the initial part of the preamble, but also drive means associated with the movable upright and controlling its longitudinal traverse toward and away from the revolving table, piloted by the output signal from an analog adder in receipt of two electrical signals representing linear functions respectively of the longitudinal distance between the uprights, and the temperature of the machine bed.

In a machine of the patent type thus outlined, the distance between the two uprights is monitored at a height corresponding to that of the bed, such that no account is taken of the differences between the monitored value and a value that would reflect the effective distance on the level at which the hob enters into contact with the work.

Whilst the mechanism of the reactions produced by distortion of the machine can be likened on initial appraisal to an imaginary hinge of which the pivot coincides with the bed, the angular movement is in fact accompanied by elongation occurring along the horizontal axis as the result of linear expansion; consequently, the patent monitoring system referred to above is liable to an element of error that will increase with height, and though the margin can be limited and controlled on a piece by piece basis, such errors may no longer be acceptable in the face of the tighter manufacturing tolerances now being specified.

Accordingly, the object of the present invention is to overcome the drawbacks described above.

The stated object is realized in a gear cutting machine as characterized in the appended claims, which incorporates a processing unit such as will monitor distortion in the machine by effecting a comparison between the values of linear dimensional variations registering on a level corresponding substantially to the top part of the bed, and those of similar variations occurring at a higher level corresponding to the more elevated parts of the uprights, and, on the basis of the monitored values (and therefore of the differences between them), automatically pilot an adjustment in the position of the movable upright to maintain the requisite distance between the axis of the cutting tool and that of the work.

In this way, it becomes possible to monitor all and any deformations liable to alter the dimensions of the machine and reposition the movable upright as appropriate, to the end of obtaining a constantly controlled machining operation.

According to the invention, use might also be made of thermal sensing means designed to give a real time indication of the temperature at one or more parts of the machine, thereby allowing adjustments in the position of the movable upright on the basis of a comparison, effected by the processing unit, between monitored temperature values and selected reference parameters.

An additional advantage of the invention is that the means for monitoring distortions described and illustrated can be retro-fitted to machines already in use, and the machines themselves thus upgraded to higher qualitative standards.

The invention will now be described in detail, by way of example, with the aid of the accompanying drawing:

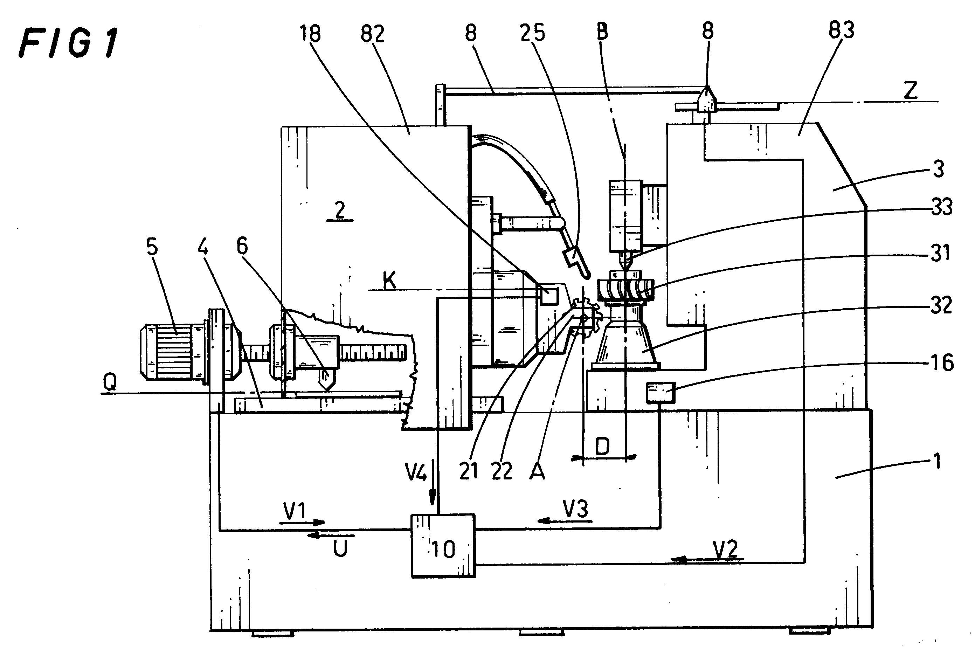

- fig 1, which illustrates a preferred embodiment of the gear cutting machine according to the present invention in a side elevation, with certain parts omitted better to reveal others.

Referring to the accompanying drawing, the gear cutting machine to which the invention relates is of the type comprising a bed 1, and above the bed, a first upright 2 affording a first axis A about which the cutting tool 21 is supported and rotated, and a second upright 3 affording a second axis B about which the work 31 is supported and rotated.

22 denotes a spindle head associated with the face of the first upright 2 directed toward the second upright 3 and supporting the axis of rotation A of the tool 21, which is disposed horizontally in the example of fig 1; also associated with the first upright 2 is a nozzle 25 positioned to dispense the cutting fluid required when machining operation. The work 31 is secured concentrically with the relative axis of rotation B, clamped between a revolving table 32 and a chuck 33.

One of the two uprights, and more exactly the first upright 2 in the example illustrated, is rendered capable of movement along slide ways 4 through the agency of drive means 5, in such a way as to allow a selective variation of the distance separating the uprights 2 and 3, and therefore the distance D between the relative axes of rotation A and B.

The machine affords first sensing means 6 serving to monitor the position of the movable upright 2, associated with the slide ways 4 and installed on a level Q substantially coinciding with a top portion of the bed 1, by which linear variations in the distance between the uprights 2 and 3 are converted into corresponding first electrical signals V1 for use in piloting the operation of the drive means 5.

More exactly, these first signals V1 reflect linear deformations registering in the structure of the machine at the level Q in question, caused by the various stresses to which the machine is subject.

Whilst in the example of fig 1 the first sensing means 6 are associated with the slide ways 4 along which the movable upright 2 is traversed by the drive means 5, such sensing means might be located equally well in another position, perhaps remote from the drive means 5, provided that the effect is to indicate the distortion occurring at the level denoted Q.

To advantage, the machine is equipped with second position sensing means 8 associated with at least two mutually opposed portions 82 and 83 of the two uprights 2 and 3, located at a level Z higher than the level Q occupied by the first position sensing means 6, by which linear variations in the distance between the two uprights 2 and 3 (in this instance registering at the higher level Z) are transduced into corresponding second electrical signals V2.

The first and second signals V1 and V2 provide two inputs to a processing unit 10, connected to the drive means 5 and to each of the position sensing means 6 and 8, of which the output consists in a control signal U used to pilot the operation of the drive means 5 in response to differences between the linear variations sensed at the first level Q and at the second level Z. For practical purposes, the signals V1 and V2 provide values indicative of deformations, whether of thermal or other origin, occurring in the machine respectively at a level Q coinciding substantially with the top of the bed 1 and at a level Z coinciding with the topmost part of the machine; in this way, it becomes possible to evaluate both the angular and the linear movements mentioned in the preamble, which cause the machine to react in the manner of a hinge, and to correct the resulting distortion by adjusting the position of the movable upright 2 through the medium of the drive means 5 whenever the appropriate signal U is generated by the processing unit 10.

The machine disclosed is further equipped with at least third, and in this instance thermal sensing means 16, also connected to the processing unit 10, the function of which being to convert temperature variations occurring at a given area of the machine into corresponding third electrical signals V3; the information contained in these third signals V3 is processed by the unit 10 together with that of the first and second signals V1 and V2 to produce the output signal U controlling the drive means 5.

The third sensing means 16 occupy an area of the machine compassed by the first and second position sensing levels Q and Z in the vertical dimension, and by the two uprights 2 and 3, or at least by the portions 82 and 83 of the two uprights interacting with the second position sensing means 8, in the longitudinal dimension.

In the example illustrated, the machine is equipped with third sensing means 16 and with fourth sensing means 18, both connected to the processing unit 10, positioned respectively near the revolving table 32 and in the vicinity of the spindle head 22 carrying the axis A of the tool 21, and serving to transduce the temperature variations registering at these two parts of the machine into corresponding third and fourth electrical signals V3 and V4; accordingly, the information contained in these third and fourth signals V3 and V4 can be processed by the unit 10 together with that of the first and of the second signals V1 and V2 in producing the output signal U supplied to the drive means 5.

The processing unit 10 is programmed with selected parameters against which to compare the electrical signals received from the sensing means. Utilizing these parameters, which are set to typical values of linear deformation produced in the machine by variations in temperature, the processing unit 10 can pilot a movement of the upright 2 by way of the control signal U relayed to the drive means 5, in response both to the changes in position and to the variations in temperature that register during the machining cycle, thus stabilizing and maintaining a set distance between the work 31 and the tool 21 and ensuring compliance of the finished gear with the stringent requirements of current standards.

The position sensing means 6 and 8 and temperature sensing means 16 and 18 might consist in devices of any conventional type, having whatever structural and operating characteristics, capable of detecting physical changes within the machine and converting them into corresponding electrical signals for use by the processing unit 10, which likewise may be of any given type conventional or otherwise.

## Claims

1. A gear cutting machine, of the type comprising a bed (1) surmounted by a first upright (2) affording a first axis (A) about which a cutting tool (21) is supported in rotation, a second upright (3) facing the first upright and affording a second axis (B) about which the work (31) is supported in rotation, drive means (5) by which at least one upright (2) is rendered capable of movement along ways (4) in such a manner as to allow of varying the distance between the uprights (2, 3), hence the distance (D) separating the respective axes (A, B) of rotation, and first sensing means (6) serving to monitor the position of the movable upright (2) in relation to that of the remaining upright (3), associated with the drive means (5) and the ways (4) and disposed on a first level (Q) coinciding substantially with the top of the bed (1), by which linear variations in the distance separating the two uprights at the first level (Q) are transduced into a corresponding first electrical signal (V1) such as can be used to pilot the operation of the drive means (5), characterized,
in that it further comprises:
- second sensing means (8) interacting with at least two mutually opposed upper portions (82, 83) of the two uprights (2, 3), located at a second level (Z) higher than the level (Q) occupied by the first sensing means (6), by which linear variations in the distance separating the uprights (2, 3) at the higher level (Z) are converted into a corresponding second electrical signal (V2);
- a processing unit (10) connected to the drive means (5) and to the first and the second sensing means (6, 8), in receipt at least of the first and second electrical signals (V1, V2) and designed to produce an output control signal (U) such as can be utilized to pilot the operation of the drive means (5) in response to differences between the linear variations sensed at the first level (Q) and at the second level (Z).

2. A gear cutting machine as in claim 1, comprising at least third sensing means (16), connected to the processing unit (10), of which the function is to convert variations in temperature occurring at a selected area of the machine into a corresponding third electrical signal (V3), wherein the third electrical signal (V3) is processed by the unit (10) in conjunction with the first and second electrical signals (V1, V2) to produce the output signal (U) controlling the operation of the drive means (5).

3. A gear cutting machine as in claim 2, wherein the third sensing means (16) occupy a position in the machine compassed by the first and second sensing levels (Q, Z) in the vertical dimension, and by the two uprights (2, 3), or at least by the projection in plan of the portions (82, 83) of the uprights interacting with the second sensing means (8), in the longitudinal dimension.

4. A gear cutting machine as in claim 1, comprising at least third sensing means (16) and fourth sensing means (18) connected to the processing unit (10), associated respectively with the second upright (3) in a position adjacent to a revolving table (32) rotatable about the second axis (B) and supporting the work (31), and with the first upright (2) in a position adjacent to a spindle head (22) by which the tool (21) is supported in rotation about the first axis (A), and serving to convert variations in temperature registering at the two respective points of the machine into corresponding third and fourth electrical signals (V3, V4), wherein the third and fourth signals (V3, V4) are processed by the unit (10) in conjunction with the first and second signals (V1, V2) to produce the output signal (U) controlling the operation of the drive means (5).

5. A gear cutting machine as in claim 2 or claim 4, wherein the processing unit (10) is programmed with predetermined parameters, corresponding to values of linear deformation produced in the machine by variations in temperature, against which to compare the electrical signals received from the sensing means.
